# EUROPEAN PATENT APPLICATION

(11) **EP 2 987 677 A1**
(43) Date of publication of application: **24.02.2016**
(21) Application number: 14181400.4
(22) Date of filing: 19.08.2014
(51) Int. Cl.: B60L 11/18, B60L 3/04, B60L 1/04, B60L 3/00

(54) **A charging device with a connector suitable for both, level 1 and level 2 charging systems**

(71) Applicant: Vestel Elektronik Sanayi ve Ticaret A.S., 45030 Manisa (TR)
(72) Inventor: Kirisken, Barbaros, 45030 Manisa (TR)
(74) Representative: Cayli, Hülya

(57) **Abstract**

With the present invention, a charging device, which is compatible with both Level I and Level II charging systems, for an electrical vehicle is provided. Said charging device comprise, one mains power plug (102) which is able to connect to a mains power socket (101), wherein said mains power plug (102) is compatible with the home mains power sockets and comprises at least one protection hole (119) with a special shape; at least one source selection element (104), which is in connection with said mains power plug (102) and which identifies power source from said mains power socket (101) as the line-to-neutral or line-to-line; at least one switching element (103) which is in connection with said selection element (104) and which switches the supply voltage received from said mains power socket (101) according to identified power source; and at least one vehicle charging plug (105), which delivers the switched current to an electrical vehicle.

## Description

### Technical Field

Present invention is related to charging devices for the electrical vehicles.

### Prior Art

Electric vehicles comprise batteries and battery management systems for charging the batteries. Said battery management systems are connected to voltage sources (such as mains voltage) through charging devices (charging cables). AC electric vehicle charging devices are classified according to their output voltages and available charging currents. Low power AC chargers are generally classified as Level I chargers and they use ordinary house hold mains plug and electrical outlets; therefore they used line to neutral supply voltage. On the other hand higher voltage and current AC chargers are generally classified as Level II and uses line to line supply which can reduce charging duration up to four times compared with Level I. Level II chargers have output voltages approximately √3 times Level I and doubles the maximum current available. Level I chargers have no station or installation need so that they are given as a cable, they can used as on-the-road charger. Level II chargers need installation to a fixed place, for example in a garage and they cannot use as on-the-road charger. Because of charging needs cable type Level I on-the-road charger is a must inside the car. Because of the different requirements of the Level I and Level II charge cables, different cables are used for in the home (Level I) and on the road (Level II) charging applications.

Patent document no. US2014167694A1 discloses a fast charging system for electric vehicles. According to this document, vehicles are charged at the charging stations with high current levels. However, said charging system is only provides a solution for the charging stations, not the home applications.

### Brief Description of the Invention

With the present invention, a charging device, which is compatible with both Level I and Level II charging systems, for an electrical vehicle is provided. Said charging device comprise, one mains power plug which is able to connect to a mains power socket, wherein said mains power plug is compatible with the home mains power sockets and comprises at least one protection hole with a special shape; at least one source selection element, which is in connection with said mains power plug and which identifies power source from said mains power socket as the line-to-neutral or line-to-line; at least one switching element which is in connection with said selection element and which switches the supply voltage received from said mains power socket according to identified power source; and at least one vehicle charging plug, which delivers the switched current to an electrical vehicle.

Charging device of the present application can be used with Level I and Level II charging systems without changing the mains power plug. Moreover, since said mains power plug has a special shape, charging device of the present application is used with standard Level I mains power sockets and Level II mains power sockets with special shape. Thanks to the special shape (standard home socket with protection pin) of the Level II mains power sockets, it is prevented to connect any Level II incompatible device to Level II mains power sockets.

### Object of the Invention

The main object of the present application is to provide a charging device, which is used with both Level I and Level II charging systems, for the electrical vehicles.

Another aim of the present application is to provide a charging device with high portability.

### Description of Drawings

Figure 1 shows a block diagram of the charging device of the present invention.
Figure 2 shows an exemplary view of the charging device of the present invention.
Figure 3 shows circuit diagram of the charging device of the present invention.
Figure 4 shows a flow chart of the source selection method of the present invention.
Figure 5 shows a controllable switch assembly of a switching element of the charging device of the present invention.
Figure 6 shows an exemplary mains power socket of the present invention.
Figure 7 shows an exemplary mains power plug of the present invention.

| | |
|---|---|
| First line voltage | (ADC1) |
| Second line voltage | (ADC2) |
| Line current | (ADC3) |
| Mains power socket | (101) |
| Mains power plug | (102) |
| Switching element | (103) |
| Source selection element | (104) |
| Vehicle charging plug | (105) |
| Protection element | (106) |
| Over cable box | (107) |
| Cable | (108) |
| Controller | (109) |
| First voltage detection element | (110) |
| Second voltage detection element | (111) |
| Current detection element | (112) |
| Switch input line | (113) |
| Switch output line | (114) |
| Line switch | (115) |
| Magnetic coil | (116) |
| Coil driver | (117) |
| Protection pin | (118) |
| Protection hole | (119) |

### Detailed Description of the Invention

In the electrical vehicles, electrical energy is stored in the batteries and stored energy is used for energising the vehicle. In order to store the electrical energy, said batteries are charged using relatively high voltage (for example with mains power) sources. According to voltage and current level of the power sources, charging systems are described with different levels. For example, charging systems that uses line-to-neutral mains voltage are called Level I charging systems and charging systems that uses line-to-line mains voltage are called Level II charging systems. Since the line-to-neutral and line-to-line charging structures are different, said charging systems uses different charging cables. Therefore, electrical vehicles need two different cables for charging the vehicle. Present invention provides a solution for requiring two different charging cables by providing a charging device which is compatible with both Level I and Level II charging systems.

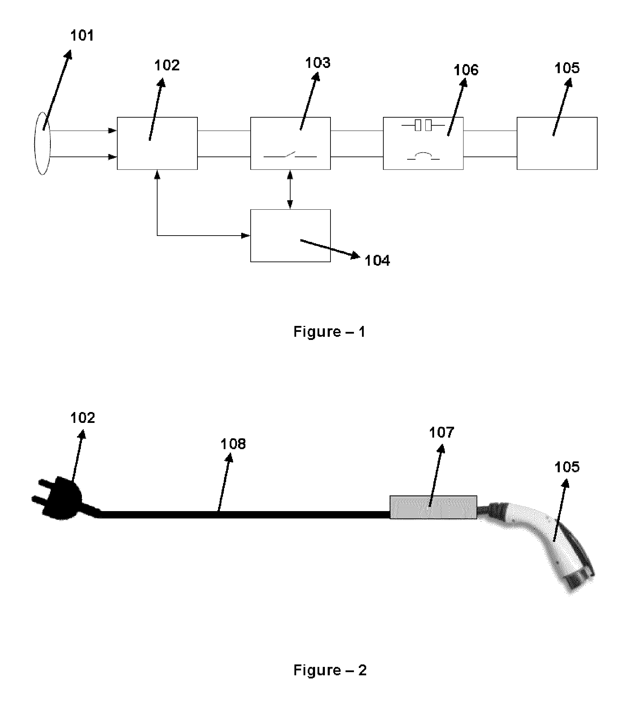

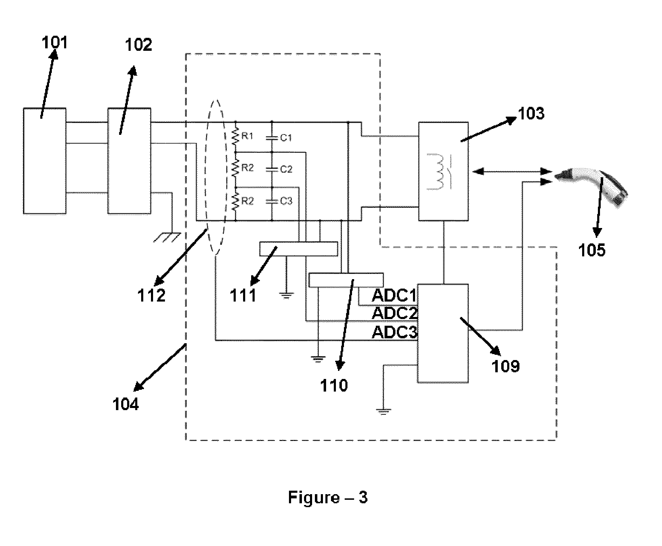

Exemplary embodiments of the charging device of the present application are given in figures 1-7. Charging device of the present application comprises one mains power plug (102) which is able to connect to a mains power socket (101); at least one source selection element (104), which is in connection with said mains power plug (102) and which identifies power source from said mains power socket (101) as the line-to-neutral or line-to-line; at least one switching element (103) which is in connection with said selection element (104) and which switches the supply voltage received from said mains power socket (101) according to identified power source; and at least one vehicle charging plug (105), which delivers the switched current to an electrical vehicle. According to the present invention, switching element (103) is altered to on (allowing current to pass) and of (prevent current to pass) with different frequencies. Said frequency is controlled according to identified power source.

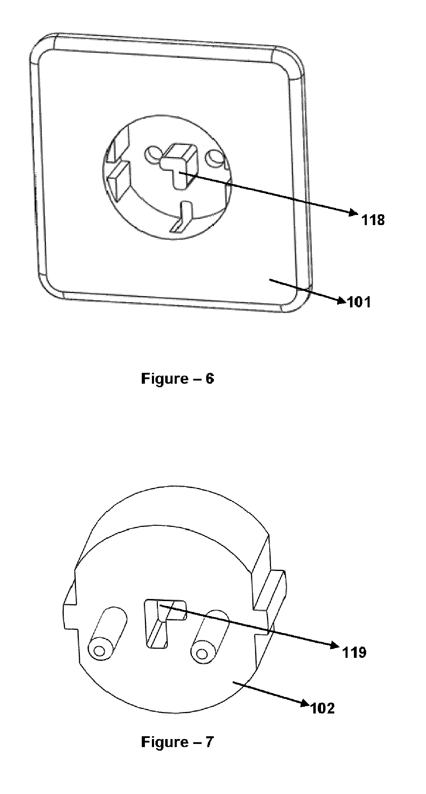

According to present invention, said mains power plug (102) is compatible with the home mains power sockets (for example which has a standard home plug shape). In this embodiment, mains power plug (102) comprises at least one protection hole (119) (shown in figure 7) with a special shape (for example with L shape). Moreover, according to this embodiment, Level II (line-to-line) type mains power socket (101) is a standard home mains power socket involving at least one protection pin (118) (shown in figure 6) which is compatible with said hole (119). Therefore, according to the present application, same mains power plug (102) is used with both Level I and Level II mains power sockets (101), wherein it is prevented to use a standard home power plug with a Level II mains power socket.

In a preferred embodiment of the present application, said source selection element (104) comprises at least one first voltage detection element (110), which measures the voltage level of the current received from said mains power socket (101) as first line voltage (ADC1); and at least one controller (109), which is in connection with said first voltage detection element (110) and which sends a control signal to said switching element (103) according to said first line voltage (ADC1). In this embodiment, according to the first line voltage (ADC1), power source is identified as line-to-neutral or line-to-line.

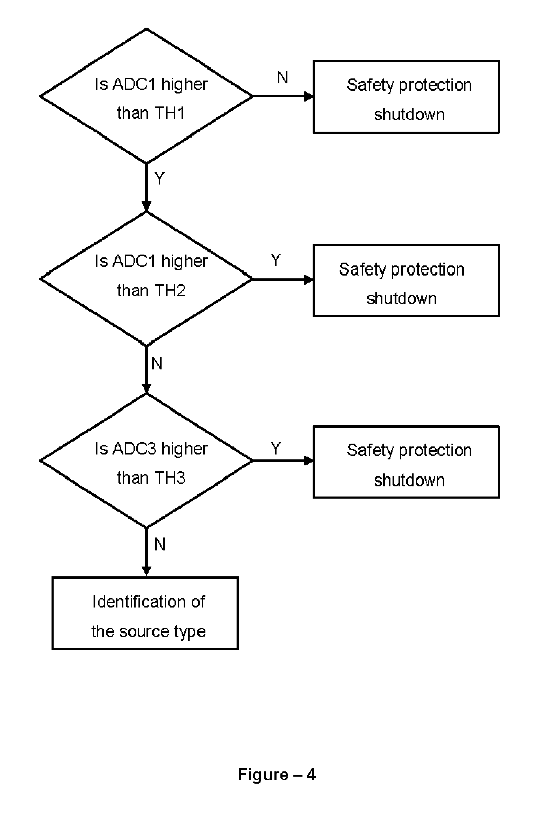

In another preferred embodiment, as shown in figure 4, first line voltage (ADC1) is used for safety purposes. According to this embodiment, before the source selection, it is checked that whether first line voltage (ADC1) is between a first threshold (TH1) and second threshold (TH2). Said first threshold (TH1) and second threshold (TH2) are respectively lowermost and uppermost input voltages that are used for charging the vehicle. According to the present invention, if first line voltage (ADC1) is lower than said first threshold (TH1) or higher than said second threshold (TH2), switching element (103) is set to an open position so as to block unsupported voltage.

In another embodiment, said source selection element (104) comprises at least one current detection element (112), which measures the current level of the current received from said mains power socket (101) as line current (ADC3); and at least one controller (109), which is in connection with said current detection element (112) and which sends a control signal to said switching element (103) according to said line current (ADC3). In this embodiment, level of the line current (ADC3) is used for safety purposes. For example, if line current (ADC3) is higher than a third threshold (TH3), switching element (103) is set to an open position so as to block the high current.

In another preferred embodiment of the present application, said controller (109) is connected to vehicle charging plug (105) so as to receive a pilot signal from the battery management system of the vehicle. In this embodiment, said pilot signal indicates the charge level of the battery of the vehicle. Therefore, according to this embodiment, switching element (103) is controlled according to identified power source and pilot signal.

During the identification of the source type, first line voltage (ADC1) is compared to several voltage ranges. In an exemplary embodiment,
if first line voltage (ADC1) is between 90-120 VAC, source is identified as Level I - US standard,
if first line voltage (ADC1) is between 150-200 VAC, source is identified as Level II - US standard
if first line voltage (ADC1) is between 205-240 VAC, source is identified as Level I - EU standard
if first line voltage (ADC1) is between 280-420 VAC, source is identified as Level II - EU standard.

In this embodiment, if first line voltage (ADC1) does not fall under any of the stated ranges, switching element (103) goes to off state so as to prevent transmitting unsupported current to electrical vehicle.

In another preferred embodiment of the present application, said source selection element (104) comprises at least one second voltage detection element (111), which measures the divided voltage level of the current received from said mains power socket (101) as second line voltage (ADC2). In this embodiment, voltage level of the current received from mains power socket (101) is divided by resistors (R1-R3) and capacitors (C1-C3). Second line voltage (ADC2) is used for replacement of the first line voltage (ADC1). In other words, according to this embodiment if a problem occurs at first line voltage (ADC1) (such as short cut etc.), second line voltage (ADC2) is used for safety measurements.

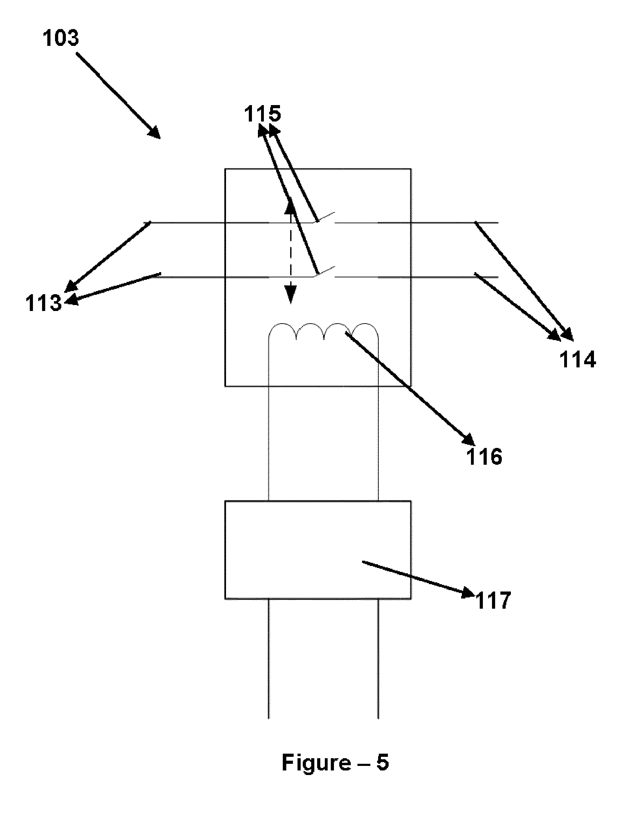

In an exemplary embodiment shown at figure 5, said switching element (103) is in the form of contact relay. In this embodiment, switching element (103) comprises at least two switch input lines (113) in connection with mains power plug (102); at least two switch output lines (114) in connection with vehicle charging plug (105); at least two line switches (115) controlling the current coming from switch input lines (113) to pass switch output lines (114); at least one magnetic coil (116), which controls the on/off states of line switches (115) and at least one coil driver (117) which controls the magnetic coil (116) according to at least one control signal received from source selection element (104).

In another preferred embodiment of the present application, charging device of the present application comprises at least one protection element (106), which connects switching element (103) to vehicle charging plug (105). Said protection element (106) protects system against surge, high voltage and short circuit conditions. Against surge, protection element (106) may comprise gas discharge tube or spark gap. Against high voltage, protection element (106) may comprise capacitive varistor. Against short circuit, protection element (106) may comprise fuse.

Charging device of the present application can be used with Level I and Level II charging systems without changing the mains power plug (102). Moreover, since said mains power plug (102) has a special shape, charging device of the present application is used with standard Level I mains power sockets (101) and Level II mains power sockets (101) with special shape. Thanks to the special shape (standard home socket with protection pin (118)) of the Level II mains power sockets (101), it is prevented to connect any Level II incompatible device to Level II mains power sockets (101).

## Claims

1. A charging device, which is compatible with both Level I and Level II charging systems, for an electrical vehicle **characterized by** comprising;
- one mains power plug (102) which is able to connect to a mains power socket (101), wherein said mains power plug (102) is compatible with the home mains power sockets and comprises at least one protection hole (119) with a special shape;
- at least one source selection element (104), which is in connection with said mains power plug (102) and which identifies power source from said mains power socket (101) as the line-to-neutral or line-to-line;
- at least one switching element (103) which is in connection with said selection element (104) and which switches the supply voltage received from said mains power socket (101) according to identified power source; and
- at least one vehicle charging plug (105), which delivers the switched current to an electrical vehicle.

2. A charging device according to claim 1, **characterized in that**; said source selection element (104) comprises at least one first voltage detection element (110), which measures the voltage level of the current received from said mains power socket (101) as first line voltage (ADC1); and at least one controller (109), which is in connection with said first voltage detection element (110) and which sends a control signal to said switching element (103) according to said first line voltage (ADC1).

3. A charging device according to claims 1 or 2, **characterized in that**; said source selection element (104) comprises at least one current detection element (112), which measures the current level of the current received from said mains power socket (101) as line current (ADC3); and at least one controller (109), which is in connection with said current detection element (112) and which sends a control signal to said switching element (103) according to said line current (ADC3).

4. A charging device according to claims 1-3 **characterized in that**; said source selection element (104) comprises at least one second voltage detection element (111), which measures the divided voltage level of the current received from said mains power socket (101) as second line voltage (ADC2).

5. A charging device according to claims 1-4, **characterized in that**; said switching element (103) is in the form of contact relay.

6. A charging device according to claims 1-5, **characterized in that**; said switching element (103) comprises at least two switch input lines (113) in connection with mains power plug (102); at least two switch output lines (114) in connection with vehicle charging plug (105); at least two line switches (115) controlling the current coming from switch input lines (113) to pass switch output lines (114); at least one magnetic coil (116), which controls the on/off states of line switches (115) and at least one coil driver (117) which controls the magnetic coil (116) according to at least one control signal received from source selection element (104).

7. A charging device according to claims 1-6, **characterized in that**; charging device of the present application comprises at least one protection element (106), which connects switching element (103) to vehicle charging plug (105).

8. A charging device according to claim 7, **characterized in that**; protection element (106) comprises gas discharge tube or spark gap.

9. A charging device according to claims 7 or 8, **characterized in that**; protection element (106) comprises capacitive varistor.

10. A charging device according to claims 7-9, **characterized in that**; protection element (106) comprises fuse.

11. A Level II type mains power socket (101), which has a for of standard home mains power socket involving at least one protection pin (118) wherein said protection pin (118) is compatible with the protection hole (119) of mains plug (102) according to any of the proceeding claims.
